Europäisches Patentamt

European Patent Office

Office européen des brevets

(11) Publication number: **0 429 563 B1**

# EUROPEAN PATENT SPECIFICATION

(45) Date of publication of patent specification: **01.12.93** (51) Int. Cl.5: **H04N 9/28**

(21) Application number: **90904207.9**

(22) Date of filing: **01.03.90**

(86) International application number:
**PCT/CA90/00069**

(87) International publication number:
**WO 90/10356 (07.09.90 90/21)**

(54) DIGITAL CONVERGENCE SYSTEM.

(30) Priority: **01.03.89 CA 592422**

(43) Date of publication of application:
**05.06.91 Bulletin 91/23**

(45) Publication of the grant of the patent:
**01.12.93 Bulletin 93/48**

(84) Designated Contracting States:
**AT BE CH DE DK ES FR GB IT LI LU NL SE**

(56) References cited:
**EP-A- 0 291 924**
**US-A- 4 422 019**

**Patent Abstracts of Japan, vol. 9, no. 291
(E-359)(2014), 19 November 1985, & JP A
60130288 (MATSUSHITA DENKI SANGYO
K.K.) 11 July 1985**

(73) Proprietor: **ELECTROHOME LIMITED**
**809 Wellington Street North**
**Kitchener Ontario N2G 4J6(CA)**

(72) Inventor: **KOEBEL, Alen**
**62 Courtland Avenue East**
**Apartment 1**
**Kitchener, Ontario N2G 2T7(CA)**

(74) Representative: **Pedder, James Cuthbert et al**
**Barlin Associates,**
**50 Throwley Way**
**Sutton, Surrey SM1 4BW. (GB)**

## Description

The present invention relates in general to video systems, and more particularly to a digital convergence correction circuit for convergence correction of projected electron beams in projection video display systems.

Well known colour video projection systems are comprised of three colour electron guns (red, green and blue) for emitting three separate electron beams which are transmitted through respective CRT face plates having respective red, green and blue phosphor layers. The coloured beams emitted from the phosphor on the faceplate of each CRT are then focused together on a projection surface with varying intensities, for creating a composite colour image. Each of the electron beams is magnetically deflected via respective main deflection coils for directing the beams from left to right across the projection surface along a plurality of horizontal scan lines. The number of scan lines appearing on the projection surface for each image (raster) may vary in relation to the scanning frequency of the projection system.

Due to various magnetic influences and non-linearities in the projection system, each of the electron beams may bend more or less in relation to one another at the left and right and top and bottom extremities of the image on the projection surface.

It is known to use vertical and horizontal convergence coils for re-orienting the electron beams at predetermined locations within the image in order to effect proper registration of the three colours.

One prior art system includes circuitry for generating analog waveforms (e.g. parabolas, sawtooth waves, etc.) and summing circuitry for adding the analog waveforms in various combinations and applying the summed waveforms to the convergence coils. This results in bending of the respective electron beams to a greater or lesser extent in relation to each other at various points within the image projection surface to compensate for the unwanted deflection due to magnetic and other non-linear influences. Such prior art analog convergence systems are difficult to use since manual correction of the registration at a particular point on the image projection surface typically influences the registration at other points, with the result that correcting the registration becomes a time-consuming operation. In many cases, the registration cannot be completely corrected for all areas within the image projection surface.

A second prior art convergence system utilizes circuitry for generating and adding only linear waveforms within a plurality of pre-designated "zones" of the image. This approach has been found to be easier to use since registration adjustment utilizing linear waveforms is intuitively simpler than using parabolic or combined parabolic and linear waveforms. However, this second prior art approach still suffers from the disadvantage that adjustment of the image in a particular zone typically influences the registration in one or more of the adjacent zones.

A digital convergence system has been developed in which horizontal and vertical adjustment values are retrieved from a digital memory and converted to analog form by means of a digital-to-analog converter (DAC), the output of which is applied to the convergence coils for effecting fine tune adjustment of the electron beam deflection. The stored values correspond to a predetermined number of points arranged in a "grid" across the entire image surface. One such prior art digital system stores horizontal and vertical values sufficient to form a grid of 256 rows of 128 values.

One problem of this prior art digital convergence system is that it requires a large amount of memory (e.g. 32 K bytes RAM for each circuit, totalling 192 K bytes RAM for the entire system). This is not only expensive, but imposes a relatively long processing time interval since the internal microprocessor must calculate many points. A second problem associated with the prior art digital system is known in the art as "line pairing". At almost all scanning frequencies, the number of scan lines per frame does not form an exact multiple of the 256 vertical rows of correction values. This requires that some of the scan lines share convergence values, which results in discontinuities in the spacing of scan lines. Also, since typical prior art digital systems output 8-bit values for positioning a screen point to a predetermined desired accuracy, it has been found that a one-bit change in the correction value between two adjacent scan lines is very visible to the naked eye. The low resolution aspect of such prior art digital systems results in the distinctive and visually disconcerting effect known as "basket weaving".

In order to eliminate the line pairing problem, at least one row of correction values is required for each scan line in the image (raster). Furthermore, in order to reduce the "basket weaving" effect beyond the perception of the eye, at least 12-bit accuracy is required for each correction value. However, storing 12-bit values for (typically) 1024 scan lines per image would require 256 K bytes of memory for each colour (i.e. 1.5 megabytes of memory in total). This is not only impractical from a cost perspective, but is also impractical in terms of the microprocessor processing time required to calculate so many points.

An improved digital convergence system is described in US-A-4,672,275 (Sony Corporation) which uses an interpolation circuit for deriving correction values for a predetermined proportion, e.g. every other line, of the screen scan lines between two neighbouring adjustment points on the basis of the correction data of such two adjustment points. The interpolation circuit transmits the resultant interpolated correction data to a digital-to-analog converter. The converter then transforms the digital signals to analog correction signals which are applied via a low-pass filter and output terminal to convergence correction coils.

Thus, in accordance with the Sony device, a much smaller amount of memory (e.g. less than 1K x 8 bit RAM) is required for storing the convergence correction values than prior art digital convergence systems.

The interpolation circuit used in the Sony device is disclosed in greater detail in U.S. Patent 4,305,022 (Sony Corporation). This latter Sony Patent discloses a coefficient signal generating circuit, a multiplying circuit, and an adding circuit for producing scan line correction signals during scanning of a horizontal line other than one of the sampling lines for which correction values have been recorded. The circuit accomplishes this by linearly interpolating sampling line correction values received from memory on the basis of the vertical position of the scan line relative to the vertical position of the sampling lines to which sampling line correction signals correspond.

In operation, the memory used in the Sony interpolation circuit generates two correction values for each of the horizontal sampling positions scanned by the electronic beam in accordance with two address values. The first address value is the address of the corresponding horizontal sampling position on the highest number of sampling line which the electronic beam has started to scan within the current video field (i.e. zone), and the second supplied address value is the address of the corresponding horizontal sampling position on the next sampling line to be scanned by the electronic beam. Thus, the first correction value (designated as U) corresponds to an upper sampling line, which is the sampling line at or immediately above the horizontal line currently being scanned, and the second correction value (designated as D) corresponds to a lower sampling line, which is the sampling line immediately below the horizontal line currently being scanned.

The coefficient signal generating circuit of Sony produces a 4-bit weighting coefficient Wu when the complementing pulse Cx is "0" or logic low during the time the upper sampling line correction value U is read from the memory. The coefficient signal generating circuit produces a weighting coefficient of Wd when the complementing signal Cx is "1" or logic high during the time that the lower sampling correction value D is read from memory. For each horizontal line scanned, the weighting coefficient Wd = 1/16 of the value of the lower 4-bits of the horizontal line count contained within the line address signal generating circuit, and the weighting coefficient Wu = 1 - Wd. Successive correction values U and D are applied to the digital input of a digital-to-analog converter which in response generates corresponding analog voltages which are supplied to the multiplicand input of the aforementioned multiplying circuit. Synchronized therewith, the weighting coefficient values Wd and Wu are supplied to the multiplying circuit with the result that the multiplying circuit first generates an output voltage corresponding to Wu•U, and then generates an output voltage corresponding to Wd•D for each of the horizontal sampling positions scanned by the electron beam. These alternate weighted line sampling signals Wu•U and Wd•D are supplied to the input of the aforementioned adding circuit. As a result, the adding circuit generates a correction signal which corresponds fairly accurately to the horizontal correction value on each of 16 scan lines between the two sampling lines for which user correction values have been stored in the memory.

Although the Sony patents describe a form of correction circuit which performs vertical interpolation in hardware, the described circuit is frequency dependant and therefore suffers from the aforementioned problems of line pairing and "basket weaving" for frequencies of operation in which there are not exactly 16 scan lines between stored values. In particular, the Sony device can eliminate line pairing only at the expense of changing the number and the vertical spacing of the correction points on the screen with respect to frequency in order to maintain exactly 16 scan lines between user-defined adjustment points. On the other hand, in the event that the number of correction points and the spacing therebetween is kept the same regardless of frequency, the Sony system suffers from line pairing artifacts because some of the scan lines between user points are required to share correction values.

A convergence correction circuit described in EP-A-291924 (Hitachi Ltd) in which various implementations of circuits are discussed to perform horizontal interpolation of convergence points and to adjust the characteristics of the interpolation to account for various horizontal frequencies, horizontal screen sizes and horizontal retrace intervals.

Horizontal interpolation is a much different problem than vertical interpolation. There are a fixed number of clock cycles between adjustment points horizontally while vertically there can be a variable number of scan lines between the adjustment rows depending on the horizontal and vertical sync frequencies of the video source.

In solving the problem of horizontal interpolation, Hitachi describes a dual DAC output scheme utilizing an invertor circuit. Specifically, Hitachi presents the four low order bits of a horizontal counter to the multiplying terminals of the DACs.

Hitachi also has a vertical interpolation circuit utilising a vertical Phase-locked loop (PLL) to generate 4096 counts representing 4096 "virtual" scan lines down the vertical extent of the image. The foremost significant bits of this address and the foremost significant bits of the horizontal count address are applied to an EPROM wherein are stored the data at each convergence point. The datum at a given point consists of four bits for the convergence value at that point and for bits for the value of the adjacent point immediately below. Both of these values and the remaining eight bits of the twelve bit count are input to a 64 K byte ROM as addresses. The resulting data from the ROM is the interpolated value, which is converted to analogue with a DAC. However, this arrangement suffers from the considerable expense of the vertical PLL and also its inherent instability other problems of accuracy are also present.

In the present invention, an interpolation circuit is provided which interpolates a new correction value for every scan line between user-defined values, independently of frequency of operation. As a result, the interpolation circuit of the present invention eliminates line pairing artifacts while at the same time maintaining the position of the convergence correction points on the video screen independent of video input frequency. Moreover, the interpolation circuit of the present invention benefits from the cost and processing time reductions accruing from use of only a small memory (e.g. typically 2K x 8 bit RAM or less) for storing the user-defined convergence adjustment points. Furthermore, according to another feature of the present invention, circuitry is provided for generating interpolated correction values with an accuracy greater than 12 bits, thereby overcoming the prior art problem of "basket weaving".

In accordance with one aspect of the present invention,there is provided a scanning rate correction apparatus for generating interpolated correction values intermediate a pair of user-defined correction values associated with respective predetermined scan lines of a video display system, the improvement comprising:

(a) detecting means for detecting the number (N) of successive scan lines (i) between said respective predetermined scan lines;

(b) generating means for a pair of weighting coefficients having values of $\alpha = i/N$ and $1-\alpha = 1-i/N$, respectively, for each said successive scan lines (i);

(c) first means for multiplying a first one of said pair of user-defined correction values by a first one of said pair of weighting coefficients ($\alpha$) for each said successive scan lines (i) and in response generating successive first product values;

(d) second means for multiplying the other of said pair of user- defined correction values by the other of said pair of weighing coefficients ($1-\alpha$) for each said successive scan lines (i), and in response generating successive second product values; and

(e) means for summing said successive first and second product values and in response generating said interpolated correction values for each said successive scan lines (i).

In accordance with another aspect of the present invention, there is provided a digital convergence circuit for a video display system including circuitry for generating a vertical timing pulse signal and a horizontal timing pulse signal, in which said circuit comprises:

(a) vertical address generator means for receiving said vertical timing pulse signal and in response generating successive paris of vertical address signals;

(b) horizontal address generator means for receiving said horizontal timing pulse signal and in response generating successive horizontal address signals;

(c) first memory means for receiving said successive pairs of vertical address signals and said successive horizontal address signals and in response generating successive pairs of user-defined convergence correction signals associated with respective horizontal adjustment points on predetermined scan lines of said video display system;

(d) means for detecting the number (N) of successive scan lines (i) between successive ones of said predetermined scan lines, and in response generating a further address signal representative thereof;

(e) further address generator means for generating successive count address signals representing said successive scan lines(i);

(f) second memory means for receiving said further address signal and said successive count address signals and in response generating successive pairs of weighting coefficient signals having values of $\alpha = i/N$ and $1 - \alpha = 1 - i/N$ respectively, for successive ones of said count address signals;

(g) first converter means for multiplying successive first ones of said pairs of user-defined convergence correction signals by respective first ones of said pairs of weighting coefficient signals ($\alpha$) and in response generating successive first product signals;

(h) second converter means for multiplying successive second ones of said pairs of user-defined convergence correction signals by respective second ones of said pairs of weighting coefficient signals $(1-\alpha)$ and in response generating successive second product signals; and

(i) means for summing said successive first product signals with said successive second product signals and in response generating interpolated convergence correction signals for each said successive scan lines (i).

In accordance with yet another aspect of the present invention, there is provided a generating circuit for generating weighting coefficients in an interpolation circuit for multiplying first and second predetermined convergence correction values corresponding to a pair of sample points by a plurality of respective first and second weighting coefficient values corresponding to successive additional sample points (i) intermediate said first and second sample points, in which said circuit comprises;

(a) means for detecting the number (N) of said successive additional sample points (i), and in response generating a first address signal representative thereof;

(b) means for generating successive count address signals corresponding to said successive additional sample points (i);

(c) memory means for receiving said first and successive count address signals and in response generating respective ones of said first weighting coefficient values $\alpha$ in accordance with the relation $\alpha = i/N$; and

(d) means for receiving and inverting said respective ones of said first weighting coefficient values and in response generating respective ones of said second weighting coefficient values in accordance with the relation $1 - \alpha = 1 - i/N$, whereby a distinct convergence correction value is generated for each said sample points (i) intermediate said first and second sample points.

A preferred embodiment of the present invention will be described in greater detail below with reference to the following drawings, in which:

Figure 1 is a diagram of a test image illustrating user-defined convergence correction points in accordance with the digital convergence system of the present invention;

Figure 2 is a block schematic diagram of a digital convergence system in accordance with the present invention;

Figure 3 is a schematic diagram of circuitry for generating weighting coefficients in accordance with a preferred embodiment of the present invention; and

Figure 4 is a schematic diagram of circuitry for calibrating vertical timing pulse signals in accordance with a further aspect of the preferred embodiment.

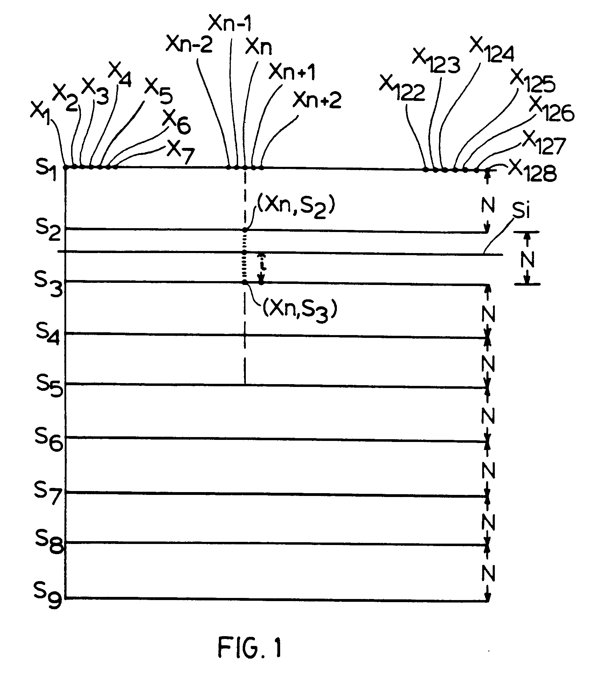

Turning to Figure 1, a convergence correction grid is shown for a digital video display system incorporating a plurality of user-defined correction points arranged in an array. In accordance with the illustrated embodiment, the grid is arranged in 9 rows ($S_1$-$S_9$) of 128 user-defined correction points (X1-X128) per row. Although not shown, in accordance with the principles of well known digital convergence correction systems, the user is provided with suitable input means (e.g. keypad) for individually adjusting each of the correction points to ensure proper convergence of the video image in all three colours (i.e. red, green and blue).

However, as discussed above, in order to eliminate line pairing artifacts, at least one row of correction values is required for each scan line in the image (raster). Furthermore, in order to reduce "basket weaving" beyond the perception of the eye at least 12-bit accuracy is required for the digital correction values.

Thus, in accordance with an essential aspect of the present invention, convergence correction values are interpolated in the vertical scan direction for each scan line.

As shown in Figure 1, the total number of scan lines in the video raster is such that there are N scan lines between each row of user-defined adjustment points. In other words, N = total number of scan lines divided by 8.

As an example, consider the correction values at Xn, $S_2$ and Xn, $S_3$. There are N scan lines between rows $S_2$ and $S_3$. According to the present invention, the interpolated correction value at a given scan line $S_i$ is calculated as follows:

Interpolated value = i/N (Xn, $S_2$) + (1 - i/N) • (Xn, $S_3$)
= $\alpha$ • (Xn, $S_2$) + (1 - $\alpha$) • (Xn, $S_3$)

where $\alpha$ = i/N represents a weighting coefficient.

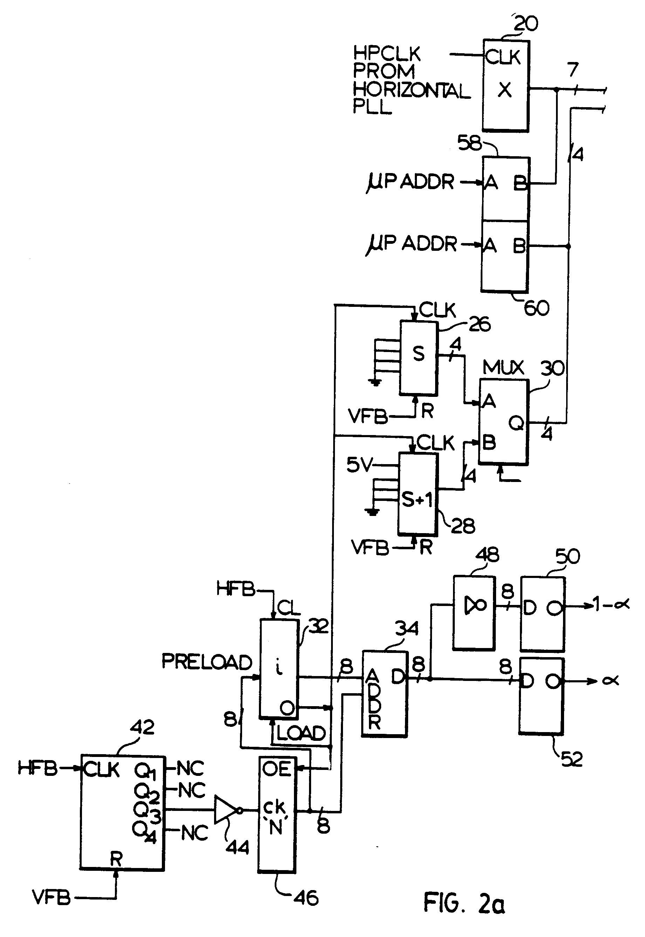

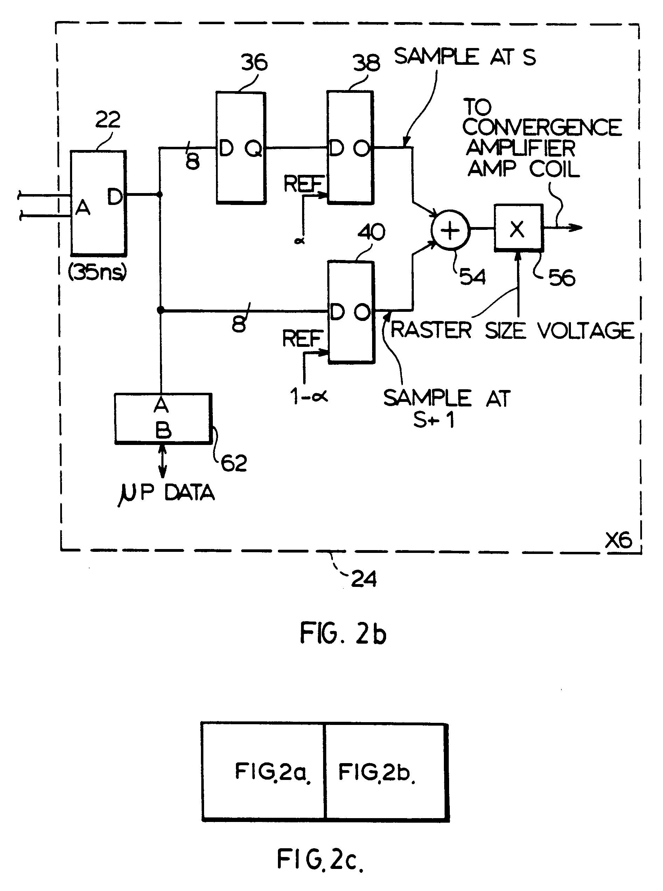

Turning to Figure 2, the circuitry for generating $\alpha$ and the resultant convergence correction values is shown in its most general form.

The digital video display system forming the environment in which the circuit of the present invention operates typically includes well known horizontal phase locked loop circuitry for generating a horizontal clock signal HPLLCLK as well as horizontal and vertical fly-back pulse signals HFB and VFB respectively.

The HPLLCLK signal is received from the horizontal phase locked loop circuitry and applied to the clock input of a horizontal address counter 20 which in response generates a 7-bit address signal for addressing each correction memory circuit 22 of six interpolation circuits 24 for generating horizontal and vertical correction values for each of the red, green and blue electron beams of the digital video display system. Although six interpolation circuits are required, only one such circuit 24 is shown in Figure 2 for ease of description.

Thus, counter 20 generates address signals for designating each of the horizontal convergence correction points X1-X128 shown in Figure 1.

Further counters 26 and 28 in combination with multiplexer 30 form a vertical address generator for generating a 4-bit vertical address signal for identifying the respective grid scan lines $S_1$-$S_9$ (Figure 1) accommodating the various horizontal correction points X1-X128. The 4-bit address value output from the vertical address generator is combined with the 7-bit value output from the horizontal address counter 20 for addressing the correction value memory 22. In accordance with the embodiment shown, the correction value memory 22 is in the form of a fast (35 nS) CMOS static RAM configured as 2K x 8 bits.

Counter 32 receives the HFB signal on a clock input thereof and in response generates address signals for addressing a coefficient memory 34 as discussed in greater detail below. A further output of counter 32 generates a clock signal corresponding to the HFB pulse for clocking counters 26 and 28.

As discussed above, for each horizontal address (e.g. Xn) two correction values are required from adjacent vertical scan lines (e.g. $S_2$ and $S_3$) in order to calculate an interpolated correction value for each scan line between the respective vertical scan lines. Thus, in accordance with the circuit of Figure 2, counter 26 is initially preset to zero upon receipt of each vertical fly-back pulse VFB whereas counter 28 is preset to logic 1 upon receipt of the VFB signal.

Accordingly, counters 26 and 28 generate a pair of 4-bit vertical address signals, the address signal output from counter 28 being offset from the signal output from counter 26 by a value of logic 1. Multiplexer 30 selects the address signal from counter 26 during a first half of the HPLLCLK signal and selects the output signal from counter 28 during the latter half of the HPLLCLK signal.

Thus, for each horizontal address identified by counter 20, a pair of correction values (e.g. Xn, $S_2$ and Xn, $S_3$) are generated by correction memory 22. The first correction value (e.g. Xn, $S_2$) is stored in a latch circuit 36 and thereafter applied to the data input of a digital-to-analog converter 38 simultaneously with the latter correction value (e.g. Xn, $S_3$) being applied to the data input of another digital-to-analog converter 40.

As discussed above, a key aspect to the present invention relates to generation of weighting coefficient values $\alpha$ and $1 - \alpha$ for each scan line of the raster.

To this end, a counter 42 is reset by the VFB pulse for each raster and clocked by the HFB signal for generating a further clock signal on the Q3 output thereof which is applied via inverter 44 to the clock input of an additional counter 46. Counter 42 effectively generates a clock signal of the form HFB divided by 8 for clocking counter 46. Thus, counter 46 counts every 8 scan line in a full raster. As discussed above, this count is equivalent to the number of scan lines N between successive ones of the scan lines $S_1$ to $S_9$ for which user-defined correction values are stored in the memory 22.

Counter 32 is pre-loaded with the count value N and decremented upon receipt of the HFB pulses on the clock input thereof. Accordingly, counter 32 generates a series of address signals (i) corresponding to each scan line between successive ones of the scan lines $S_1$ to $S_9$.

The address signals "i" and "N" are applied to address inputs of EPROM 34 as discussed above. The number of user input (i.e. stored) rows of correction values $S_1$ to $S_9$ is assumed to be such that $N \leq 256$, (i.e. accommodating up to 2048 lines per raster). Since $N \leq 256$, a 64K byte EPROM 34 can be used to store 256 $\alpha$ values for each of up to 256 scan lines intermediate adjacent rows of correction values. Hence, the $\alpha$ values are accessed by means of a table look-up with "i" and "N" forming address inputs.

The 8-bit $\alpha$ value generated by memory 34 is applied to an inverter 48 and therefrom to the data inputs of a digital-to-analog converter 50. The value of $\alpha$ is simultaneously applied directly to the data inputs of a further digital-to-analog converter 52 such that converter 52 generates an analog representation of $\alpha$ while converter 50 generates an analog representation of $1 - \alpha$.

Returning to the convergence circuitry 24, the analog values of $\alpha$ and $1 - \alpha$ are applied to respective voltage reference inputs of digital-to-analog converters 38 and 40 respectively. Converters 38 and 40 are multiplying DACs for converting and then multiplying the respective pairs of convergence correction values (e.g. Xn, $S_2$ and Xn, $S_3$) by the weighting coefficients $\alpha$ and $1 - \alpha$ respectively.

It has been discovered that by multiplying the 8-bit sample values retrieved from memory 22 by $\alpha$ (or $1 -\alpha$) which itself is an analog conversion of an 8-bit digital value, the output from converters 38 and 40 corresponds to a greater than 8-bit accuracy for all values between sample points. In other words, converters 38 and 40 function as companding DACs yielding an equivalent accuracy of greater than 12-bits. As discussed above, the high accuracy of the correction values generated by the circuitry of the present invention results in elimination of "basket weaving" artifacts.

The analog outputs from converters 38 and 40 are summed via a summing circuit 54 and then output via a raster size multiplier circuit 56 to the appropriate horizontal or vertical convergence amplifier and correction coil.

As discussed above, the weighting coefficient values $\alpha$ and $1 - \alpha$ are simultaneously applied to the voltage reference inputs of the digital-to-analog converters 38 and 40 for each of the six convergence correction circuits 24. Thus, the weighting coefficient generating circuitry is not required to be repeated for each of the circuits 24.

Additional latches 58, 60 and 62 are provided for addressing memory 22 via the address inputs thereof and storing user-defined correction values therein via the data inputs thereof, in a well known manner.

In summary, the circuitry of Figure 2 provides up to nine stored lines $S_1$-$S_9$ of 128 correction values per line, thereby defining eight convergence correction zones. The circuitry generates correction values for every scan line (i) between the stored scan lines $S_1$, $S_2$ ... $S_9$. The generated correction values are synthesized to greater than 12-bit resolution by vertical interpolation. Furthermore, in accordance with the present invention, complete storage for both horizontal and vertical correction values is provided for all colours (e.g. red, green and blue) requiring a total of only 12K bytes of SRAM (i.e. six 2K x 8-bit RAMs 22).

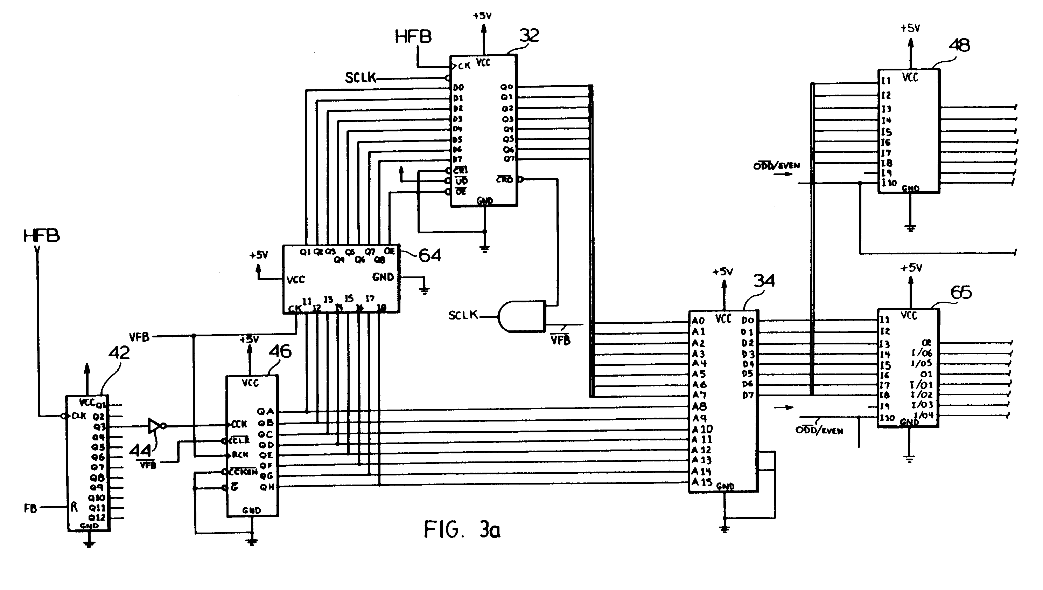

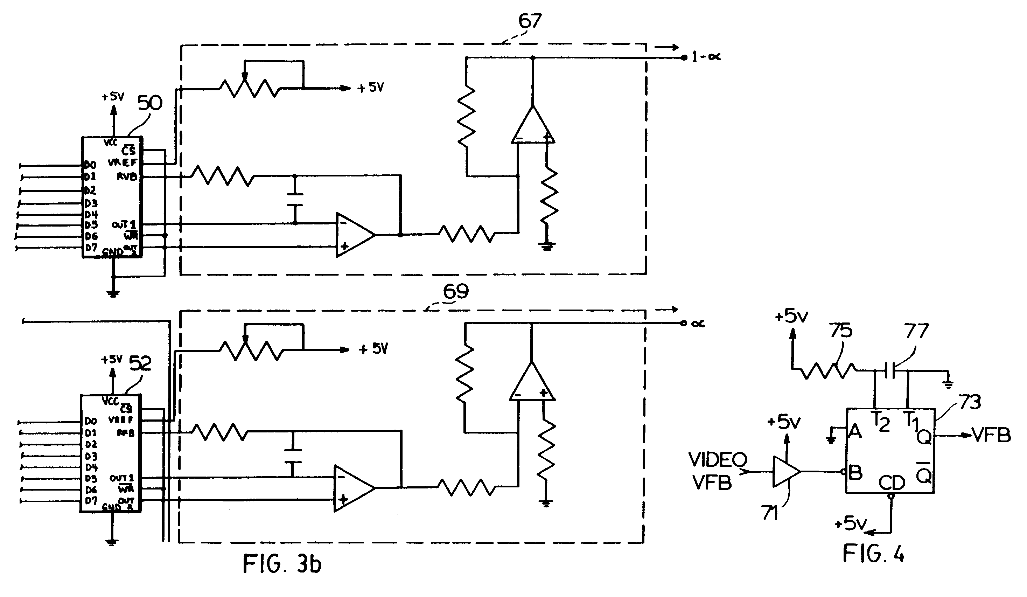

Turning to Figure 3, a detailed schematic diagram is shown illustrating the circuitry for generating weighting coefficient values $\alpha$ and $1 -\alpha$ in accordance with the preferred embodiment.

In operation, the HFB pulse is applied to a clock input of counter 42, which as discussed above with reference to Figure 2, has the Q3 output thereof connected via an inverter 44 to the clock input of additional counter 46. Counter 46 receives the VFB timing pulse signal and in response generates a value N on the outputs Qa-Qh thereof.

The value N is applied to inputs I1-I8 of a programmable array logic circuit (PAL™) designated as 64. PAL™ 64 receives VFB signal as a clock input thereof and in response converts the value N to N - 1 via well known internal programmed logic circuitry, and applies the value N - 1 to the Q1-Q8 outputs thereof for further application to the data inputs D0-D7 of counter 32.

Counter 32 is a down counter for receiving the HFB signal on a clock input thereof and in response generating successive descending address signals "i" corresponding to each scan line per zone.

The 8-bit address values "N" and "i" are applied to the address inputs A0-A15 of EPROM 34 for accessing corresponding weighting coefficient values as discussed above with reference to Figure 2. The weighting coefficient values $\alpha$ appear on data terminals D0-D7 of EPROM 34 and are applied therefrom to data inputs I1-I8 of respective PAL™ circuits 48 and 65 for performing EXCLUSIVE OR logic operations on the data bits comprising the weighting coefficient, as discussed in greater detail below. Circuit 48 operates further to invert the $\alpha$ value and in response generating the inverted value $1 - \alpha$.

The digital values of $\alpha$ and $1 - \alpha$ are transmitted from the data outputs of PAL™ circuits 65 and 48 to data inputs D0-D7 of respective digital-to-analog converters 52 and 50.

Digital-to-analog converters 50 and 52 generate differential analog output signals responsive to receipt of the digital $\alpha$ and $1 - \alpha$ correction values for application to analog amplifier circuits 67 and 69. Circuits 67 and 69 each comprise a plurality of differential amplifiers and associated gain and offset circuitry configured in a well known manner. The analog signals representing $\alpha$ and $1 - \alpha$ are then applied to the respective voltage reference inputs of multiplying digital-to-analog converters 38 and 40, as discussed above with reference to Figure 2.

The EXCLUSIVE OR operation performed by PAL™ circuits 65 and 48 is required to ensure that, for each zone (i.e. pair of scan lines for which correction values are stored), one of the converters 50 or 52 will retain the stored correction value which is common to the adjacent scanned pair of zones. This effectively overcomes non-linearities inherent in the digital-to-analog converters which could otherwise result in a different analog representation of $\alpha$ for the same digital value generated by EPROM 34 when different ones of the converters 50 and 52 are used to process the same digital $\alpha$ value for different convergence zones.

Figure 4 illustrates a circuit for shortening the vertical fly-back pulse (VIDEO VFB) which is generated by the video display system, in accordance with an additional aspect of the preferred embodiment.

In a typical video display system, the blanking period during which the electron beam goes from the bottom to the top of the screen is approximately 300 microseconds to 350 microseconds and normally includes a small number of horizontal scan lines while the beam is retracing. As discussed above, counters 42 and 46 operate to count the number of scan lines "N" per convergence zone. According to the preferred embodiment, counter 42 operates as a divide-by-eight counter. Accordingly, for one raster scan, (i.e. period between successive VFB pulses), up to seven scan lines can be missed (i.e. not counted by counter 42).

Thus, the circuit of Figure 4 receives the standard VIDEO VFB pulse from the video display system, conditions the pulse via a buffer 71 and applies the level adjusted signal to the B input of a flip-flop 73. The flip-flop 73 incorporates time delay circuitry in the form of an RC network comprised of resistor 75 and capacitor 77 such that the output Q of the flip-flop generates a modified VFB pulse which is shortened with respect to VIDEO VFB in order that all of the raster scan lines can be counted between successive VFB pulses.

In other words, instead of counting the entire number of scan lines in the active raster as defined by the normal VIDEO VFB pulse, the modified VFB pulse provided by the circuitry of Figure 4 results in a retrace time which is reduced to less than one scan line in order that all scan lines are counted, even though not all scan lines necessarily show up on the screen. This effectively eliminates any discontinuity resulting from an inaccurate calculation of the value N.

In summary, according to the present invention, a digital convergence system is provided for generating convergence correction values at each scan line of an entire raster for overcoming line pairing artifacts which are generated in prior art convergence systems in which the number of correction values is less than the entire number of scan lines. Circuitry is provided in the present invention for counting the number of scan lines per convergence zone for various frequencies of operation and in response generating interpolated correction values for each scan line per zone. Accordingly, the convergence system of the present invention is independent of operating frequency. Furthermore, the generated convergence correction values are of approximately 12-bit accuracy, thereby overcoming the "basket weaving" artifact common in prior art systems.

Other embodiments or variations of the present invention are possible.

For example, the circuitry may be modified to incorporate fewer or greater than eight convergence correction zones or fewer or greater than 128 correction values per scan line as provided by the preferred embodiment.

Also, the circuitry of the present invention may be applied to laser projection, CRT, LCD or other video applications requiring convergence of video images, or the production of any two-dimensional correction waveform.

In addition, circuit 24, embodying the interpolation equation, could be realized by entirely digital means employing parallel digital multipliers and accumulator registers.

Furthermore, EPROM 34 may be realized by any sort of random access memory device.

## Claims

1. A scanning rate correction apparatus for generating interpolated correction values intermediate a pair of user-defined correction values associated with respective predetermined scan lines of a video display system, characterised by:

(a) detecting means (46) for detecting the number N of successive scan lines i between said respective predetermined scan lines;

(b) generating means (34,48,50,52) for generating a pair of weighting coefficients having values of $\alpha = i/N$ and $1 - \alpha = 1 - i/N$, respectively for each said successive scan lines i;

(c) first means (38) for multiplying a first one of said pair of user-defined correction values by a first one of said pair of weighting coefficients $\alpha$ for each said successive scan lines i and in response generating successive first product values;

(d) second means (40) for multiplying the other of said pair of user-defined correction values by the other of said pair of weighting coefficients $1 - \alpha$ for each said successive scan lines i, and in response generating successive second product values; and

(e) means (54) for summing said successive first and second respective product values and in response generating said interpolated correction values for each said successive scan lines i.

2. An apparatus as claimed in claim 1, characterised in that said means for generating further comprises:

(a) memory means (34) for storing a plurality of values of said first one of said pair of weighting coefficients $\alpha$ corresponding to different values of i and N, said memory means (34) being addressed by said values of i and N to generate said plurality values of said first one of said pair of weighting coeffecients $\alpha$; and

(b) inverter means (48) for inverting said plurality of values of said first one of said pair of weighting coefficients $\alpha$ generated by said memory means (34), and in response generating various corresponding values of said other one of said pair of weighting coefficients $1 - \alpha$.

3. An apparatus as claimed in claim 2, characterised in that said means for detecting further comprises:

(a) means (42) for counting the total number of said scan lines per raster of said video display system; and

(b) means (46) for dividing said total number of said scan lines by the total number of said respective predetermined scan lines per raster of said video display system, and in response generating said number N of successive scan lines i.

4. An apparatus as claimed in claim 1, 2 or 3, characterised in that said means (34) for generating further comprises a 64K EPROM for storing 256 of said weighting coefficients $\alpha$ for each said pair of user-defined correction values.

5. An apparatus as claimed in claim 1, 2 or 3, wherein said first means (58) and said second means (40) are multiplying digital-to-analog converters.

6. A digital convergence circuit for a video display system including circuitry for generating a vertical timing pulse signal and a horizontal timing pulse signal, characterised in that said circuit comprises:

(a) vertical address generator means (26, 28, 30) for receiving said vertical timing pulse signal and in response generating successive pairs of vertical address signals;

(b) horizontal address generator means (20) for receiving said horizontal timing pulse signal and in response generating successive horizontal address signals;

(c) first memory means (22) for receiving said successive pairs of vertical address signals and said successive horizontal address signals and in response generating successive pairs of user-defined convergence correction signals associated with respective horizontal adjustment points on predetermined scan lines of said video display system;

(d) means (46) for detecting the number N of successive scan lines i between successive ones of said predetermined scan lines, and in response generating a further address signal representative thereof;

(e) further address generator means (32) for generating successive count address signals representing said successive scan lines i;

(f) second memory means (34) for receiving said further address signal and said successive count address signals and in response generating successive pairs of weighting coefficient signals having values of $\alpha = i/N$ and $1 - \alpha = 1 - i/N$ respectively, for successive ones of said count address signals;

(g) first converter means (38) for multiplying successive first ones of said pairs of user-defined convergence correction signals by respective first ones of said pairs of weighting coefficient signals $\alpha$ and in response generating successive first product signals;

(h) second converter means (40) for multiplying successive second ones of said pairs of user-defined convergence correction signals by respective second ones of said pairs of weighting coefficient signals $1 - \alpha$ and in response generating successive second product signals; and

(i) means (54) for summing said successive first product signals with said successive second product signals and in response generating interpolated convergence correction signals for each said successive scan lines i.

7. A digital convergence circuit as claimed in claim 6, characterised that said vertical address generator means (26, 28, 30) comprises first and second counters (26, 28) for generating first and second count signals in accordance with said vertical timing pulse signal generated by said video display system, said first and second counters (26, 28) being preset to initial count values of zero and one respectively, and a multiplexer (30) for alternately receiving said first and second count signals and in response generating said successive pairs of vertical address signals.

8. A digital convergence circuit as claimed in claim 6, characterised in that said horizontal address generator means comprises a counter (28) for generating said successive horizontal address signals in accordance with said horizontal timing pulse signal generated by said video display system.

9. A digital convergence circuit as claimed in claim 6, characterised in that said first memory means comprises a RAM circuit (22) for storing said user-defined convergence correction signals.

10. A digital convergence circuit as claimed in claim 6, characterised in that said means for detecting further comprises:

(a) means (42) for counting the total number of said scan lines per raster of said video display system; and

(b) means (46) for dividing said total number of said scan lines by the total number of said respective predetermined scan lines per raster of said video display system, and in response generating said number N of successive scan lines i.

**11.** A digital convergence circuit as claimed in claim 8, characterised in that said further address generator means comprises a down counter (42) for receiving said horizontal timing pulse and successively counting down from said number N of successive scan lines i to zero and in response generating said successive count address signals.

**12.** A digital convergence circuit as claimed in claim 6, characterised in that said second memory means comprises an EPROM (34) for storing said weighting coefficient signals.

**13.** A digital convergence circuit as claimed in claim 6, characterised in that said first and second converter means are multiplying digital-to-analog converters (38, 40).

**14.** A generating circuit for generating weighting coefficients in an interpolation circuit for multiplying first and second predetermined convergence correction values corresponding to a pair of sample points by a plurality of respective first and second weighting coefficient values corresponding to successive additional sample points i intermediate said first and second sample points, characterised in that said circuit comprises:

(a) means (46) for detecting the number N of said successive additional sample points i, and in response generating a first address signal representative thereof;
(b) means (32) for generating successive count address signals corresponding to said successive additional sample points i;
(c) memory means (34) for receiving said first and successive count address signals and in response generating respective ones of said first weighting coefficient values $\alpha$ in accordance with the relation $\alpha = i/N$; and
(d) means (43) for receiving and inverting said respective ones of said first weighting coefficient values $\alpha$ and in response generating respective ones of said second weighting coefficient values in accordance with the relation $1 - \alpha = 1 - i/N$, whereby a distinct convergence correction value is generated for each said sample points i intermediate said first and second sample points.

**15.** A circuit as claimed in claim 14, characterised in that said means for detecting further comprises:

(a) means (42) for counting the total number of said scan lines per raster of said video display system; and
(b) means (46) for dividing said total number of said scan lines by the total number of said respective predermined scan lines per raster of said video display system, and in response generating said number N of successive scan lines i.

**16.** A circuit as claimed in claim 14, characterised in that said means for generating comprises a down counter (32) for receiving said horizontal timing pulse and successively counting down from said number N of successive scan lines i to zero and in response generating said successive count address signals.

**17.** A circuit as claimed in claim 14, characterised in that said memory means comprises an EPROM (34) for storing weighting coefficient signals.

**18.** A circuit as claimed in claim 17, characterised in that said EPROM is a 64K x 8-bit EPROM (34) for storing 256 of said first weighting coefficient values $\alpha$ for each of 256 possible numbers N of said additional sample points i.

**19.** A circuit as defined in claim 10, characterised by means (71, 73, 75, 77) for calibrating said vertical timing pulse signal to ensure that each of said scan lines is counted per raster by said means for detecting.

**Patentansprüche**

**1.** Bildfolgekorrekturvorrichtung zum Erzeugen interpolierter Korrekturwerte zwischen einem Benutzer-definierten Korrekturwertepaar, das mit entsprechenden, festgelegten Abtastzeilen eines Bildausgabesystems verbunden ist, gekennzeichnet durch

(a) eine Detektoreinrichtung (46) zum Erfassen der Anzahl N aufeinanderfolgender Abtastzeilen i zwischen den jeweiligen, festgelegten Abtastzeilen;
(b) Einrichtungen (34, 48, 50, 52) zum Erzeugen eines Wichtungsfaktorpaares mit den Werten $\alpha = i/N$ und $1 - \alpha = 1 - i/N$ für jeweils jede der aufeinanderfolgenden Abtastzeilen i;

(c) eine erste Einrichtung (38) zum Multiplizieren eines ersten Benutzer-definierten Korrekturwertes mit einem ersten Wichtungskoeffizienten $\alpha$ für jede der aufeinanderfolgenden Abtastzeilen i, wobei die erste Einrichtung (38) nacheinander erste Produktwerte erzeugt;

(d) eine zweite Einrichtung (40) zum Multiplizieren des anderen Benutzer-definierten Korrekturwertes mit dem anderen Wichtungskoeffizienten 1 - $\alpha$ für jede der aufeinanderfolgenden Abtastzeilen i, wobei die zweite Einrichtung (40) dann nacheinander zweite Produktwerte erzeugt; und

(e) eine Einrichtung (54) zum Aufsummieren der jeweiligen aufeinanderfolgenden ersten und zweiten Produktwerte, welche dann die interpolierten Korrekturwerte für jede der aufeinanderfolgenden Abtastzeilen i erzeugt.

2. Vorrichtung nach Anspruch 1, dadurch gekennzeichnet, daß die Einrichtung zum Erzeugen des weiteren

(a) eine Speichereinrichtung (34) zum Speichern einer Vielzahl von Werten des ersten Wichtungskoeffizienten $\alpha$ bezüglich verschiedener Werte von i und N aufweist, wobei die Speichereinrichtung (34) durch die Werte i und N adressiert wird, um eine Vielzahl von Werten für den ersten Wichtungskoeffizienten $\alpha$ zu erzeugen; und

(b) einen Inverter zum Invertieren einer Vielzahl von Werten des ersten Wichtungskoeffizienten $\alpha$, welche durch die Speichereinrichtung (34) erzeugt worden sind, aufweist, wobei der Inverter (48) dann die entsprechenden verschiedenen Werte für den anderen Wichtungskoeffizienten 1 - $\alpha$ erzeugt.

3. Vorrichtung nach Anspruch 2, dadurch gekennzeichnet, daß die Detektoreinrichtung des weiteren

(a) eine Einrichtung (42) zum Zählen der Gesamtzahl der Abtastzeilen pro Raster des Bildausgabesystems aufweist; und

(b) eine Einrichtung (46) zum Teilen der Abtastzeilengesamtzahl durch die Gesamtzahl der entsprechenden, festgelegten Abtastzeilen pro Raster des Bildausgabesystems aufweist, wobei dann durch die Einrichtung (46) die Zahl N der aufeinanderfolgenden Abtastzeilen i erzeugt wird.

4. Vorrichtung nach Anspruch 1, 2 oder 3, dadurch gekennzeichnet, daß die Einrichtung (34) weiter ein 64K EPROM zum Speichern von 256 Wichtungskoeffizienten $\alpha$ für jedes Benutzer-definierte Korrekturwertepaar aufweist.

5. Vorrichtung nach Anspruch 1, 2 oder 3, wobei die erste Einrichtung (38) und die zweite Einrichtung (40) Multiplikations-Digital-Analog-Wandler sind.

6. Digital-Konvergenz-Schaltung für ein Bildausgabesystem mit einer Schaltung zur Erzeugung eines vertikalen und eines horizontalen Steuerimpulssignals, dadurch gekennzeichnet, daß die Schaltung

(a) eine Adresserzeugungseinrichtung (26, 28, 30) zum Empfang des vertikalen Steuerimpulssignals aufweist, welche dann aufeinanderfolgende vertikale Adressignalpaare erzeugt;

(b) eine Adresserzeugungseinrichtung (20) zum Empfang des horizontalen Steuerimpulssignals aufweist, welche dann aufeinanderfolgende horizontale Adressignale erzeugt;

(c) eine erste Speichereinrichtung (22) zum Empfang der aufeinanderfolgenden vertikalen Adressignalpaare und der aufeinanderfolgenden horizontalen Adressignale aufweist, welche dann aufeinanderfolgende Paare von Benutzer-definierten Konvergenzkorrektursignalen erzeugt, die mit entsprechenden horizontalen Einstellpunkten auf festgelegten Abtastzeilen des Bildausgabesystems verbunden sind;

(d) eine Einrichtung (46) zum Erfassen der Zahl N von aufeinanderfolgenden Abtastzeilen i zwischen den aufeinanderfolgenden festgelegten Abtastzeilen aufweist, welche dann ein hierfür repräsentatives weiteres Adressignal erzeugt;

(e) eine weitere Adresserzeugungseinrichtung (32) zur Bildung aufeinanderfolgender Adresszählsignale, die die aufeinanderfolgenden Abtastzeilen i repräsentieren, aufweist;

(f) eine zweite Speichereinrichtung (34) zum Empfang des weiteren Adressignals sowie der aufeinanderfolgenden Adresszählsignale aufweist, welche dann aufeinanderfolgende Wichtungskoeffizientenpaarsignale mit den Werten $\alpha$ = i/N und 1 - $\alpha$ = 1 - i/N für aufeinanderfolgende Adresszählsignale erzeugt;

(g) einen ersten Konverter (38) zum sukzessiven Multiplizieren eines ersten Benutzer-definierten Konvergenzkorrektursignals mit einem ersten Wichtungskoeffizientensignal $\alpha$ aufweist, welcher dann aufeinanderfolgende erste Produktsignale erzeugt;

(h) einen zweiten Konverter (40) zum sukzessiven Multiplizieren des zweiten Benutzer-definierten Konvergenzkorrektursignals mit dem zweiten Wichtungskoeffizientensignal 1 - $\alpha$ aufweist, der dann aufeinanderfolgende zweite Produktsignale bildet; und

(i) eine Einrichtung (54) zum Aufsummieren der aufeinanderfolgenden ersten Produktsignale mit den aufeinanderfolgenden zweiten Produktsignalen aufweist, welche dann interpolierte Konvergenzkorrektursignale für jede der aufeinanderfolgenden Abtastzeilen i bildet.

7. Digitale Konvergenzschaltung nach Anspruch 6, dadurch gekennzeichnet, daß die Adresserzeugungseinrichtung (26, 28, 30) einen ersten und zweiten Zähler (26, 28) zum Erzeugen eines ersten und zweiten Zählsignals entsprechend des durch das Bildausgabesystem gebildeten vertikalen Steuerimpulssignals, wobei der erste und zweite Zähler (26, 28) auf den Anfangszählwert 0 bzw. 1 eingestellt sind, und einen Multiplexer (30) zum wechselweisen Empfang des ersten und zweiten Zählsignals aufweist, welcher das aufeinanderfolgende vertikale Adressignalpaar erzeugt.

8. Digitale Konvergenzschaltung nach Anspruch 6, dadurch gekennzeichnet, daß die Adresserzeugungseinrichtung einen Zähler (28) zur Bildung aufeinanderfolgender horizontaler Adressignale entsprechend der durch das Bildausgabesystem erzeugten horizontalen Steuerimpulssignale aufweist.

9. Digitale Konvergenzschaltung nach Anspruch 6, dadurch gekennzeichnet, daß die erste Speichereinrichtung eine RAM-Schaltung (22) zum Speichern der Benutzer-definierten Konvergenzkorrektursignale aufweist.

10. Digitale Konvergenzschaltung nach Anspruch 6, dadurch gekennzeichnet, daß die Detektiereinrichtung des weiteren

(a) eine Einrichtung (28) zum Zählen der Gesamtzahl der Abtastzeilen pro Raster des Bildausgabesystems und

(b) eine Einrichtung (46) zum Teilen der Abtastzeilengesamtzahl durch die Gesamtzahl der entsprechenden festgelegten Abtastzeilen pro Raster des Bildausgabesystems aufweist, welche dann die Zahl N der aufeinanderfolgenden Abtastzeilen i bildet.

11. Digitale Konvergenzschaltung nach Anspruch 8, dadurch gekennzeichnet, daß die weitere Adresserzeugungseinrichtung einen Abwärtszähler (42) zum Empfang des horizontalen Steuerimpulses und zum sukzessiven Zählen der Zahl N der aufeinanderfolgenden Abtastzeilen i abwärts nach 0 aufweist, welcher dann die sukzessiven Adresszählsignale erzeugt.

12. Digitale Konvergenzschaltung nach Anspruch 6, dadurch gekennzeichnet, daß die zweite Speichereinrichtung ein EPROM (34) zum Speichern der Wichtungskoeffizientensignale aufweist.

13. Digitale Konvergenzschaltung nach Anspruch 6, dadurch gekennzeichnet, daß der erste und zweite Konverter Digital-Analog-Multiplikationskonverter (38, 40) sind.

14. Schaltung zum Bilden von Wichtungskoeffizienten in einer Interpolationsschaltung, die zum Multiplizieren erster und zweiter festgelegter Konvergenzkorrekturwerte, die einem Abtastwertepaar entsprechen, mit einer Vielzahl von entsprechenden ersten und zweiten Wichtungskoeffizientenwerten, die zusätzlichen aufeinanderfolgenden Abtastwerten i zwischen dem ersten und zweiten Abtastwert entsprechen, dient, dadurch gekennzeichnet, daß die Schaltung

(a) eine Einrichtung (46) zum Erfassen der Zahl N der zusätzlichen aufeinanderfolgenden Abtastwerte i aufweist, welche dann ein hierfür repräsentatives erstes Adressignal erzeugt;

(b) eine Einrichtung (32) zum Bilden sukzessiver Adresszählsignale entsprechend der zusätzlichen aufeinanderfolgenden Abtastwerte i aufweist;

(c) eine Speichereinrichtung (34) zum Empfang der ersten und aufeinanderfolgenden Adresszählsignale aufweist, welche dann gemäß der Rechenvorschrift $\alpha = i/N$ erste Wichtungskoeffizientenwerte $\alpha$ erzeugt; und

(d) eine Einrichtung (43) zum Empfang und Invertieren der jeweiligen ersten Wichtungskoeffizientenwerte $\alpha$ aufweist, welche dann entsprechende zweite Wichtungskoeffizientenwerte gemäß der Rechenvorschrift $1 - \alpha = 1 - i/N$ erzeugt, wobei ein eigener Konvergenzkorrekturwert für jeden Abtastwert i zwischen dem ersten und zweiten Abtastwert gebildet wird.

15. Schaltung nach Anspruch 14, dadurch gekennzeichnet, daß die Einrichtung zum Detektieren weiter

(a) eine Einrichtung (42) zum Zählen der Gesamtzahl der Abtastzeilen pro Raster des Bildausgabesystems; und

(b) eine Einrichtung (46) zum Teilen der Abtastzeilengesamtzahl durch die Gesamtzahl der jeweiligen festgelegten Abtastzeilen pro Raster des Bildausgabesystems aufweist, welche dann die Anzahl N der aufeinanderfolgenden Abtastzeilen i erzeugt.

16. Schaltung nach Anspruch 14, dadurch gekennzeichnet, daß die Einrichtung zum Erzeugen einen Abwärtszähler (32) zum Empfang der horizontalen Steuerimpulse und zum sukzessiven Zählen der Zahl N der aufeinanderfolgenden Abtastzeilen i abwärts zu 0 aufweist, welcher dann die aufeinanderfolgenden Adresszählsignale erzeugt.

17. Schaltung nach Anspruch 14, dadurch gekennzeichnet, daß die Speichereinrichtung ein EPROM (34) zum Speichern der Wichtungskoeffizientensignale aufweist.

18. Schaltung nach Anspruch 17, dadurch gekennzeichnet, daß das EPROM ein 64 K x 8-bit EPROM (34) zum Speichern von 256 ersten Wichtungskoeffizientenwerten $\alpha$ für jede der 256 möglichen Zahlen N der zusätzlichen Abtastwerte i ist.

19. Schaltung nach Anspruch 10, gekennzeichnet durch eine Einrichtung (71, 73, 75, 77) zum Kalibrieren der vertikalen Steuerimpulssignale, um sicherzustellen, daß jede der Abtastzeilen pro Raster durch die Einrichtung zum Detektieren gezählt wird.

**Revendications**

1. Appareil de correction de fréquence d'image permettant de générer des valeurs de correction interpolées entre deux valeurs de correction définies par l'utilisateur et associées à des lignes de balayage prédéterminées respectives d'un système d'affichage vidéo, caractérisé par :

a) des moyens de détection (46) pour détecter le nombre N de lignes de balayage successives i entre lesdites lignes de balayage prédéterminées respectives;

b) des moyens de génération (34, 48, 50, 52) pour générer deux coefficients de pondération ayant des valeurs de $\alpha$ = i/N et 1 - $\alpha$ = 1 - i/N, respectivement, pour chacune desdites lignes de balayage successives;

c) des premiers moyens (38) pour multiplier une première desdites deux valeurs de correction définies par l'utilisateur par un premier desdits deux coefficients de pondéra-

tion $\alpha$ pour chacune desdites lignes de balayage successives i et générer en réponse une série de premières valeurs de produit successives;

d) des seconds moyens (40) pour multiplier l'autre desdites deux valeurs de correction définies par l'utilisateur par l'autre desdits deux coefficients de pondération 1 - $\alpha$ pour chacune desdites lignes de balayage successives i et générer en réponse une série de secondes valeurs de produit successives; et

c) des moyens (54) pour sommer lesdites premières et secondes valeurs de produit respectives successives et générer en réponse lesdites valeurs de correction interpolées pour chacune desdites lignes de balayage successives i.

2. Appareil selon la revendication 1, caractérisé en ce que lesdits moyens de génération comprennent par ailleurs :

a) des moyens à mémoire (34) pour stocker une série de valeurs dudit premier desdits deux coefficients de pondération $\alpha$ correspondant à différentes valeurs de i et de N, lesdits moyens à mémoire (34) étant adressés par lesdites valeurs de i et de N pour générer ladite série de valeurs dudit premier desdits deux coefficients de pondération $\alpha$; et

b) des moyens d'inversion (48) pour inverser ladite série de valeurs dudit premier desdits deux coefficients de pondération $\alpha$ générés par lesdits moyens à mémoire (34) et générer en réponse diverses valeurs correspondantes dudit autre coefficient des deux coefficients de pondération 1 - $\alpha$.

3. Appareil selon la revendication 2, caractérisé en ce que lesdits moyens de détection comprennent par ailleurs :

a) des moyens (42) pour compter le nombre total desdites lignes de balayage par trame dudit système d'affichage vidéo; et

b) des moyens (46) pour diviser ledit nombre total desdites lignes de balayage par le nombre total desdites lignes de balayage prédéterminées respectives par trame dudit système d'affichage vidéo et générer en réponse ledit nombre N de lignes de balayage successives i.

4. Appareil selon la revendication 1, 2 ou 3, caractérisé en ce que lesdits moyens de génération (34) comprennent par ailleurs une mémoire EPROM 64 K pour stocker 256 desdits coefficients de pondération $\alpha$ pour chacune

desdites deux valeurs de correction définies par l'utilisateur.

5. Appareil selon la revendication 1, 2 ou 3, dans lequel lesdits premiers moyens (58) et lesdits seconds moyens (40) sont des convertisseurs de multiplication numériques/analogiques.

6. Circuit de correction de convergence numérique pour système d'affichage vidéo comprenant un circuit permettant de générer un signal d'impulsion de synchronisation vertical et un signal d'impulsion de synchronisation horizontal, caractérisé en ce que ledit circuit comprend :

   a) des moyens générateurs d'adresses verticales (26, 28, 30) pour recevoir ledit signal d'impulsion de synchronisation vertical et générer en réponse des paires successives de signaux d'adresses verticaux;

   b) des moyens générateurs d'adresses horizontales (20) pour recevoir ledit signal d'impulsion de synchronisation horizontal et générer en réponse des signaux d'adresses horizontaux successifs;

   c) des premiers moyens à mémoire (22) pour recevoir lesdits paires successives de signaux d'adresses verticaux et lesdits signaux d'adresses horizontaux successifs et générer en réponse des paires successives de signaux de correction de convergence définis par l'utilisateur associés à des points d'ajustement horizontaux respectifs sur des lignes de balayage prédéterminées dudit système d'affichage vidéo;

   d) des moyens (46) pour détecter le nombre N de lignes de balayage successives i entre des lignes successives desdites lignes de balayage prédéterminées et générer en réponse un autre signal d'adresse qui en est représentatif;

   e) d'autres moyens générateurs d'adresses (32) pour générer des signaux d'adresses de comptage successifs représentant lesdites lignes de balayage successives i;

   f) des seconds moyens à mémoire (34) pour recevoir ledit autre signal d'adresse et lesdits signaux d'adresse de comptage successifs et en réponse générer des paires successives de signaux de coefficients de pondération ayant des valeurs de $\alpha = i/N$ et $1 - \alpha = 1 - i/N$, respectivement, pour lesdits signaux d'adresses de comptage successifs;

   g) des premiers moyens de conversion (38) pour multiplier les premiers signaux successifs desdites paires de signaux de correction de convergence définis par l'utilisateur par les premiers signaux respectifs desdites paires de signaux de coefficients de pondération $\alpha$ et générer en réponse des premiers signaux de produit successifs;

   h) des seconds moyens de conversion (40) pour multiplier les seconds signaux successifs desdites paires de signaux de correction de convergence définis par l'utilisateur par les seconds signaux respectifs desdites paires de signaux de coefficients de pondération $1 - \alpha$ et générer en réponse des seconds signaux de produit successifs; et

   i) des moyens (54) pour sommer lesdits premiers signaux de produit successifs avec lesdits seconds signaux de produit successifs et générer en réponse des signaux de correction de convergence interpolés pour chacune desdites lignes de balayage successives i.

7. Circuit de correction de convergence numérique selon la revendication 6, caractérisé en ce que lesdits moyens générateurs d'adresses verticales (26, 28, 30) comprennent un premier et un second compteurs (26, 28) pour générer un premier et un second signaux de comptage conformément audit signal d'impulsion de synchronisation vertical généré par ledit système d'affichage vidéo, lesdits premier et second compteurs (26, 28) étant préréglés à des valeurs de comptage initiales de zéro et un, respectivement, et un multiplexeur (30) pour recevoir en alternance lesdits premiers et seconds signaux de comptage et générer en réponse lesdites paires successives de signaux d'adresses verticaux.

8. Circuit de correction de convergence numérique selon la revendication 6, caractérisé en ce que lesdits moyens générateurs d'adresses horizontales comprennent un compteur (28) pour générer lesdits signaux d'adresses horizontaux successifs conformément audit signal d'impulsion de synchronisation horizontal généré par ledit système d'affichage vidéo.

9. Circuit de correction de convergence numérique selon la revendication 6, caractérisé en ce que lesdits premiers moyens à mémoire comprennent un circuit RAM (22) pour stocker lesdits signaux de correction de convergence définis par l'utilisateur.

10. Circuit de correction de convergence numérique selon la revendication 6, caractérisé en ce que lesdits moyens de détection comprennent par ailleurs :

a) des moyens (42) pour compter le nombre total desdites lignes de balayage par trame dudit système d'affichage vidéo; et

b) des moyens (46) pour diviser ledit nombre total desdites lignes de balayage par le nombre total desdites lignes de balayage prédéterminées respectives par trame dudit système d'affichage vidéo et générer en réponse ledit nombre N de lignes de balayage successives i.

11. Circuit de correction de convergence numérique selon la revendication 8, caractérisé en ce que lesdits autres moyens générateurs d'adresses comprennent un compteur à rebours (42) pour recevoir ladite impulsion de synchronisation horizontale et décompter successivement dudit nombre N de lignes de balayage successives i à zéro et générer en réponse lesdits signaux d'adresses de comptage successifs.

12. Circuit de correction de convergence numérique selon la revendication 6, caractérisé en ce que lesdits seconds moyens à mémoire comprennent une mémoire EPROM (34) pour stocker lesdits signaux de coefficients de pondération.

13. Circuit de correction de convergence numérique selon la revendication 6, caractérisé en ce que lesdits premiers et seconds moyens de conversion sont des convertisseurs de multiplication numériques/analogiques (38, 40).

14. Circuit générateur pour générer des coefficients de pondération dans un circuit d'interpolation afin de multiplier les premières et les secondes valeurs de correction de convergence prédéterminées correspondant à une paire de points d'échantillonnage par une série de premières et de secondes valeurs de coefficients de pondération correspondant à des points d'échantillonnage additionnels successifs i entre les premiers et seconds points d'échantillonnage, caractérisé en ce que ledit circuit comprend :

a) des moyens (46) pour détecter le nombre N desdits points d'échantillonnage supplémentaires successifs i et générer en réponse un premier signal d'adresse qui en est représentatif;

b) des moyens (32) pour générer des signaux d'adresses de comptage successifs correspondant auxdits points d'échantillonnage supplémentaires successifs i;

c) des moyens à mémoire (34) pour recevoir lesdits premiers et lesdits signaux d'adresses de comptage successifs et générer en réponse les valeurs respectives des premières valeurs de coefficients de pondération $\alpha$ selon la relation $\alpha = i/N$; et

d) des moyens (43) pour recevoir et inverser lesdites valeurs respectives desdites premières valeurs de coefficients de pondération $\alpha$ et générer en réponse des valeurs respectives desdites secondes valeurs de coefficients de pondération conformément à la relation $1 - \alpha = 1 - i/N$, si bien qu'une valeur de correction de convergence distincte est générée pour chacun desdits points d'échantillonnage i entre lesdits premiers et seconds points d'échantillonnage.

15. Circuit selon la revendication 14, caractérisé en ce que lesdits moyens de détection comprennent par ailleurs :

a) des moyens (42) pour compter le nombre total desdites lignes de balayage par trame dudit système d'affichage vidéo; et

b) des moyens (46) pour diviser ledit nombre total desdites lignes de balayage par le nombre total desdites lignes de balayage prédéterminées respectives par trame dudit sytème d'affichage vidéo et en réponse générer ledit nombre N de lignes de balayage successives i.

16. Circuit selon la revendicationn 14, caractérisé en ce que lesdits moyens de génération comprennent un compteur à rebours (32) pour recevoir ladite impulsion de synchronisation horizontale et décompter successivement dudit nombre N de lignes de balayage successives i à zéro et générer en réponse lesdits signaux d'adresses de comptage successifs.

17. Circuit selon la revendication 14, caractérisé en ce que lesdits moyens à mémoire comprennent une mémoire EPROM (34) pour stocker des signaux de coefficients de pondération.

18. Circuit selon la revendication 17, caractérisé en ce que ladite mémoire EPROM est une mémoire EPROM de 64K x 8 bits (34) pour stocker 256 desdites premières valeurs de coefficients de pondération $\alpha$ pour chacun des 256 nombres possibles N desdits points d'échantillonnage supplémentaires i.

19. Circuit selon la revendication 10, caractérisé par des moyens (71, 73, 75, 77) pour étalonner ledit signal d'impulsion de synchronisation vertical afin de s'assurer que chacune desdites lignes de balayage est comptée par trame à l'aide desdits moyens de détection.

FIG. 1

16

FIG. 2a

FIG. 2b

FIG. 2c.

FIG. 3a

FIG. 3b

FIG. 4

EP 0 429 563 B1